# EUROPEAN PATENT SPECIFICATION

(11) **EP 3 283 672 B1**
(45) Date of publication and mention of the grant of the patent: **17.03.2021**
(21) Application number: 16716603.2
(22) Date of filing: 15.04.2016
(51) Int. Cl.: C25D 7/00, C25D 5/10, C25D 5/48, C23C 28/02, B32B 15/01

(54) **ELECTROPLATED PRODUCT HAVING A PRECIOUS METAL FINISHING LAYER AND IMPROVED CORROSION RESISTANCE, METHOD FOR ITS PRODUCTION AND USES THEREOF**
GALVANISCH BESCHICHTETES PRODUKT MIT EINER EDELMETALLOBERFLÄCHENSCHICHT UND VERBESSERTER KORROSIONSBESTÄNDIGKEIT, VERFAHREN ZU DESSEN HERSTELLUNG UND VERWENDUNGEN DAVON
PRODUIT À REVÊTEMENT ÉLECTROLYTIQUE AYANT UNE COUCHE DE FINITION DE MÉTAL PRÉCIEUX ET UNE MEILLEURE RÉSISTANCE À LA CORROSION, SON PROCÉDÉ DE PRODUCTION ET SES UTILISATIONS

(30) Priority: 16.04.2015 EP 15163811
(43) Date of publication of application: 21.02.2018
(73) Proprietor: COVENTYA S.p.A., 22060 Carugo (CO) (IT)
(72) Inventor: ROSSI, Davide, 50013 Florence (IT); CIAPPELLI, Samuele, 51010 Marliana (PT) (IT); SIEBERT, Johanna, 46100 Figeac (FR)
(74) Representative: Pfenning, Meinig & Partner mbB
(86) International application number: PCT/EP2016/058421
(87) International publication number: WO 2016/166330

(56) References cited:
- EP-A2- 2 565 297
- US-B2- 6 780 527

## Description

This invention provides an electroplated product with a precious metal finishing layer that has an improved corrosion and abrasion resistance. The electroplated product comprises two electroplated copper alloy layers having a different copper concentration (e.g. white bronze and yellow bronze). The electroplated product is especially suitable for use in jewelry, fashion, leather, watch, eyewear, trinkets and/or lock industry. Another advantage of the electroplated product is that the use of allergenic nickel or expensive palladium intermediate layers against copper migration can be dispensed with. This means that the electroplated product can be non-allergenic (nickel-free) and be provided in a more economical and environment-friendly manner. A method for the production of the inventive electroplated product is presented. Furthermore, the use of the inventive electroplated product in the jewelry, fashion, leather, watch, eyewear, trinkets and/or lock industry is suggested.

The underlayers presently used in the fashion market to provide a high corrosion and wear resistant support for a top gold finishing layer comprises nickel and/or nickel based alloys. The allergy associated with nickel and the classification of nickel salts as carcinogenic, mutagenic and reprotoxic substances makes the use of nickel and nickel based alloys more and more restricted in this market. Thus, its use has been strongly restricted, especially for fashion and jewelry applications. Several attempts have been made to develop a nickel-free electrolytic deposit for applying metal layers to substrates.

The most commonly used alternative to nickel is white bronze which is an alloy of copper, tin and zinc. However, this alloy alone can not meet the corrosion requirements of the fashion industry. As an alternative to said alloy, layers of precious metals like palladium were used between the substrate and the final decorative finishing layer. However, palladium as an intermediate protective layer strongly increases the cost of the final item i.e. its use is uneconomical.

As an alternative to palladium, the use of different tin alloys as an intermediate barrier layer has been suggested. However, it was found that a tin content of more than 50 wt.-% in the alloy results in poor resistance to acidity and oxidants leading to corrosion and to a brightness level which are unsatisfactory for the fashion market. As a further alternative to palladium, intermediate layers consisting of chromium have been used. However, said chromium layers resulted in adhesion problems and corrosion resistance problems for the final precious metal layer such as gold. In addition, the use of toxic chromium VI is highly undesirable in the field of jewelry and fashion.

Moreover, WO 2013/164165 A1 discloses a multi-layered nickel-free surface coating for sanitary application having a copper layer, a coating of at least one metal layer consisting of an alloy of copper, tin and zinc or copper and tin, a coating of at least one metal layer consisting of chromium, copper, gold, palladium or iron and a final chromium layer. Importantly, the intermediate layer contains a precious metal (palladium or gold) that drastically increases the cost of the electroplated product or a metal such as chromium, copper and iron that drastically reduce adherence of the final decorative layer or lower the corrosion resistance of the electroplated product. Thus, the electroplated product is less suitable for the high requirements in the jewelry and/or fashion industry.

WO 2008/003216 A1 discloses an electroplated product including a copper layer on the surface of the base material, characterized in that the electroplated copper metal layer further includes a metal layer as a nickel substitute, and this nickel substitute metal is a Cu-Sn alloy, Ru, Rh, Pd, or an alloy composed of 2, 3, or 4 elements selected from Ru, Rh, Pd, and Co. However, the use of one single layer of Cu-Sn alloy is not sufficient to target the high corrosion resistance requirement for the jewelry or fashion market and the use of precious metal intermediate layers is very expensive.

Furthermore, US 6,780,527 B2 discloses a method for electroplating an article with several layers among which there are different Cu-alloy layers.

Therefore, the prior art does not fulfill the requirements of the decorative, fashion and jewelry industry of providing in an economic and easy manner an electroplated product which is non-allergenic and has a high level of brightness and improved corrosion and abrasion resistance.

Starting therefrom, it was the object of the present invention to provide an electroplated product and method for its production which overcomes said disadvantages.

The object is solved by the electroplated product according to claim 1, the method for producing the inventive electroplated product according to claim 13 and the use of the inventive electroplated product according to claim 14. The dependent claims illustrate advantageous embodiments.

According to the invention, an electroplated product is provided, comprising
a) a base material;
b) a first layer comprising or consisting of copper, wherein the first layer is disposed on the base material;
c) a second layer comprising or consisting of a first copper alloy, wherein the first copper alloy comprises tin and zinc;
d) a third layer comprising or consisting of a second copper alloy, wherein the second copper alloy comprises tin and zinc; and d) a fourth layer comprising or consisting of a precious metal;
   wherein the copper concentration in the first copper alloy is different from the copper concentration in the second copper alloy and
   wherein
   i) the second layer is disposed on the first layer, the third layer is disposed on the second layer and the fourth layer is disposed on the third layer; or
   ii) the third layer is disposed on the first layer, the second layer is disposed on the third layer and the fourth layer is disposed on the second layer; characterized in that the fourth layer is the finishing metal layer of the electroplated product and comprises or consists of a precious metal selected from the group consisting of gold, silver, platinum, ruthenium, rhodium, osmium, iridium and alloys thereof,
      wherein the electroplated product does not comprise palladium.

In the electroplated product, diffusion of copper from a copper containing layer into a layer containing less copper and/or a precious metal layer (like e.g. gold layer) is generally thermodynamically favoured. However, the presence of zinc in the copper containing layer was found to strongly decrease copper diffusion. Furthermore, it was discovered that if there is a first intermediate layer in the electroplated product which comprises or consists of a copper-zinc alloy having a lower copper concentration than a second intermediate layer which comprises or consists of a copper-zinc alloy, the first layer acts as a copper sink and prevents copper migration from copper containing layers of the electroplated product into the finishing precious metal layer of the electroplated product.

The electroplated product fulfills the main requirements of the fashion industry in terms of corrosion resistance, wear resistance and copper diffusion barrier properties. Compared to known alternatives in the prior art of palladium-less and nickel-less electroplated products, the inventive electroplated product shows a better corrosion performance, a better abrasion performance, an increased shelflife and a decreased production cost.

The copper concentration of the first copper alloy (in wt.-%) may differ from the copper concentration of the second copper alloy (in wt.-%) by an absolute value of 1 to 99 wt.-%, preferably 5 to 80 wt.-%, more preferably 10 to 60 wt.-%, even more preferably 15 to 40 wt.-%, most preferably 20 to30 wt.-%.

The inventive electroplated product is characterized in that
i) the second layer is disposed on the first layer, the third layer is disposed on the second layer and the fourth layer is disposed on the third layer; or
ii) the third layer is disposed on the first layer, the second layer is disposed on the third layer and the fourth layer is disposed on the second layer.

The copper concentration in the second alloy can be higher than the copper concentration in the first alloy. Thus, the second alloy (e.g. yellow bronze) gives better brightness than the first alloy and may be deposited at faster deposition rates (higher productivity). On the other hand, the first alloy having a lower copper concentration (e.g. white bronze) gives a harder layer and better corrosion and abrasion resistance properties compared to the second alloy. Thus, if increased hardness is desired, it is beneficial if the second layer is disposed on the third layer in the electroplated product whereas if increased brightness is desired, it is beneficial if the third layer is deposited on the second layer. In terms of corrosion resistance, it has turned out that the best sequence is if the second layer (e.g. white bronze layer) is deposited on the first layer (e.g. copper layer), the third layer (e.g. yellow bronze layer) is deposited on the second layer (e.g. white bronze layer) and the fourth layer (e.g. gold layer) is deposited on the third layer (e.g. yellow bronze layer).

The copper concentration in the
i) first copper alloy may be ≤ 65 wt.-%, preferably 30 to 64 wt.-%, more preferably 40 to 60 wt.-%, most preferably 50 to 54 wt.-%, in relation to the whole weight of the copper alloy; and/or
ii) the second copper alloy may be ≥ 66 wt.-%, preferably 68 to 90 wt.-%, more preferably 70 to 80 wt.-%, most preferably 72 to 77 wt.-%, in relation to the whole weight of the copper alloy.

The zinc concentration in the
i) first copper alloy may be ≥ 10 wt.-%, preferably 11 to 35 wt.-%, more preferably 12 to 25 wt.-%, most preferably 15 to 20 wt.-%, in relation to the whole weight of the copper alloy; and/or
ii) the second copper alloy may be ≤ 12 wt.-%, preferably 5 to 10 wt.-%, more preferably 6 to 8 wt.-%, most preferably 6 to 7 wt.-%, in relation to the whole weight of the copper alloy.

The tin concentration in the
i) first copper alloy may be ≥ 26 wt.-%, preferably 26 to 35 wt.-%, more preferably 27 to 34 wt.-%, most preferably 28 to 32 wt.-%, in relation to the whole weight of the copper alloy; and/or
ii) the second copper alloy may be ≤ 25 wt.-%, preferably 1 to 25 wt.-%, more preferably 10 to 24 wt.-%, most preferably 17 to 23 wt.-%, in relation to the whole weight of the copper alloy.

In a preferred embodiment of the invention, the first copper alloy and/or the second copper alloy comprises Bi, Pb and/or Sb, preferably Bi. Having Bi in the alloy has the advantage that the alloy becomes both brighter and has an improved blocking ability of copper migration. The first copper alloy and/or the second copper alloy may also comprise phosphorus and/or silicon.

According to the invention, the electroplated product does not comprise palladium.

In a further preferred embodiment of the invention, there is no layer comprising or consisting of nickel, cobalt and/or chromium between the first layer and fourth, wherein the electroplated product preferably does not comprise nickel, cobalt and/or chromium, most preferably no nickel.

A layer comprising or consisting of a hydrophobic substance is disposed on the fourth layer, preferably a monolayer of a hydrophobic substance, more preferably a monolayer of a hydrophobic substance comprising thiol groups, especially a monolayer of alkanethiol monomers or alkanethiol polymers like e.g. octadecanethiol monomers. This has the advantage that the surface of the finishing precious metal layer is made more hydrophobic and thus less prone to corrosion. Especially acid corrosion and corrosion due to sweat or interaction with leather is decreased. If the layer is only monomolecular in thickness, it is not visible and does not affect the appearance of the electroplated products.

The precious metal is preferably selected from the group consisting of gold, silver and alloys thereof, more preferably gold and alloys thereof, most preferably gold.

The base material may comprise or consist of bronze, brass, zamak, alpaca, copper alloy, tin alloy and/or steel. The base material may be an article selected from the group consisting of jewelry, fashion, leather industry, watches, eyewear, trinkets and locks.

The thickness of
i) the first layer may be 5 to 15 µm, preferably 8 to 12 µm;
ii) the second layer may be 1 to 10 µm, preferably 2 to 8 µm;
iii) the third layer may be 2 to 10 µm, preferably 3 to 4 µm; and/or
iv) the fourth layer may be 0.1 to 5 µm, preferably 0.2 to 1 µm.

Moreover, a method of producing the inventive electroplated product is presented, the method comprising the steps:
a) electroplating a layer comprising or consisting of a first copper alloy on a copper layer disposed on a substrate;
b) electroplating a layer comprising or consisting of a second copper alloy on the layer of step a);
c) electroplating a layer comprising or consisting of a precious metal on the layer of step b),
wherein the first copper alloy comprises tin and zinc and the second copper alloy comprises tin an zinc, and
wherein the first copper alloy layer is plated with a copper concentration different from that of the second copper alloy layer,
wherein
i) the second layer is disposed on the first layer, the third layer is disposed on the second layer and the fourth layer is disposed on the third layer; or
ii) the third layer is disposed on the first layer, the second layer is disposed on the third layer and the fourth layer is disposed on the second layer; characterized in that the layer comprising or consisting of a precious metal is the finishing metal layer of the electroplated product, wherein the precious metal is selected from the group consisting of gold, silver, platinum, ruthenium, rhodium, osmium, iridium and alloys thereof,
wherein the electroplated product does not comprise palladium.

Finally, the use of the electroplated product in jewelry industry, fashion industry, leather industry, watch industry, eyewear industry, trinkets industry and/or lock industry, is proposed.

With reference to the following figures and examples, the subject-matter according to the invention is intended to be explained in more detail without wishing to restrict said subject-matter to the special embodiments shown here.

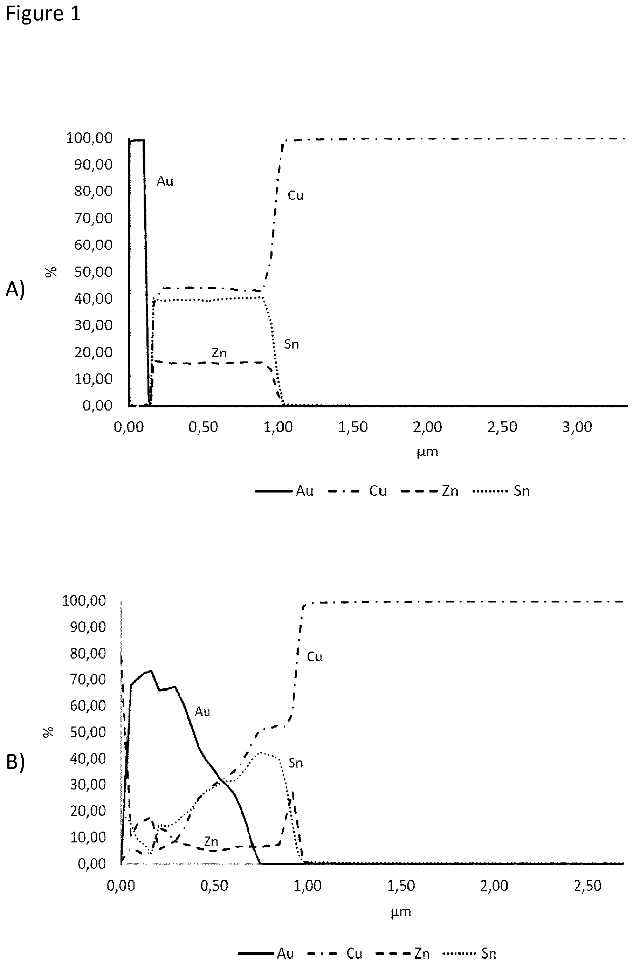

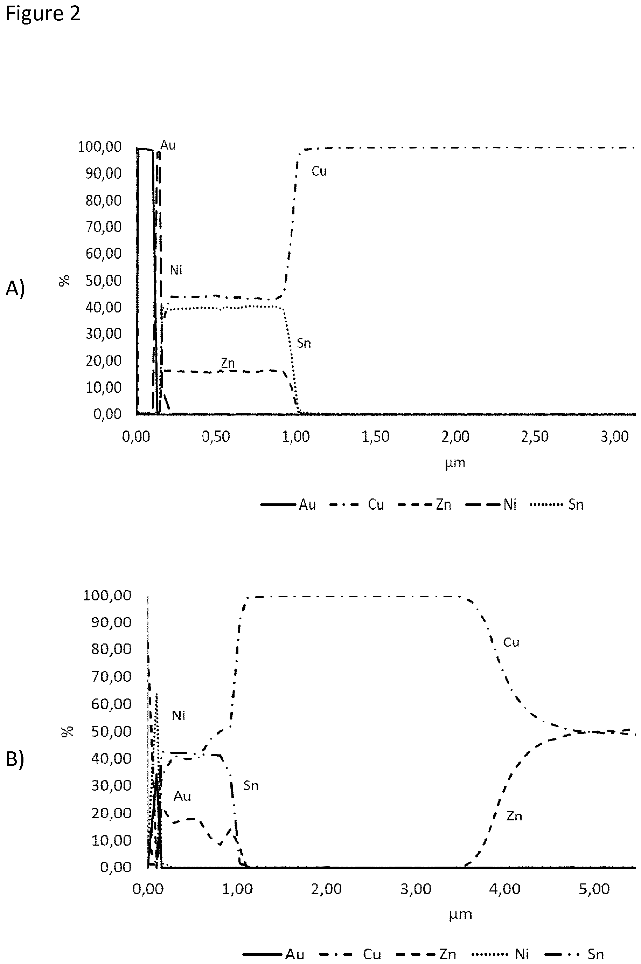

Figure 1 shows the GDOES depth profile of a nickel-less electroplated product according to Example 4 (2 µm white bronze layer (wt.-% of Cu:Sn:Zn = 40:40:20), no palladium intermediate layer) before (A) and after a heat-treatment at 180 °C for 24 hours (B). Extensive mutual diffusion of the metal atoms at the gold-white bronze interface is obvious. Due to the absence of thickness calibration, the thicknesses illustrated in the GDOES depth profile do not mirror the true layer thicknesses. This applies also to Fig. 2-6.

Figure 2 shows the GDOES depth profile of a nickel-containing electroplated product according to Example 5 (2 µm white bronze layer, palladium-nickel intermediate layer) before (A) and after a heat-treatment at 180 °C for 24 hours (B). The nickel/palladium layer inhibits any major metal migration at the interfaces.

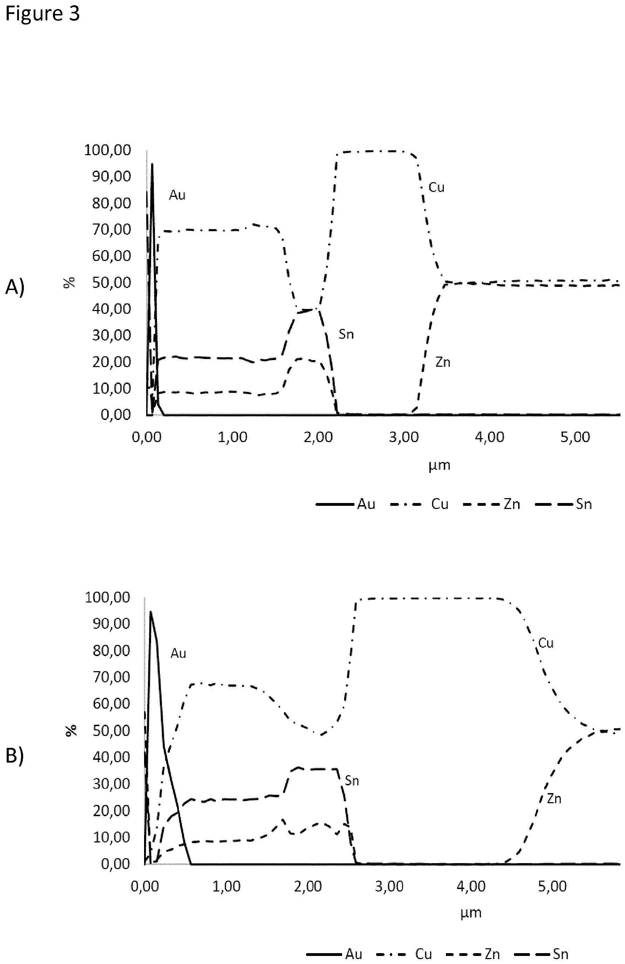

Figure 3 shows the GDOES depth profile of a nickel-free electroplated product according to Example 6 (2 µm white bronze layer with wt.-% of Cu:Sn:Zn = 40:40:20, 3 µm yellow bronze layer with wt.-% of Cu:Sn:Zn = 70:20:10, no palladium intermediate layer) before (A) and after a heat-treatment at 180 °C for 24 hours (B). The migration of gold and copper at the interface concerned is strongly reduced. Copper migrates predominantly from yellow to white bronze.

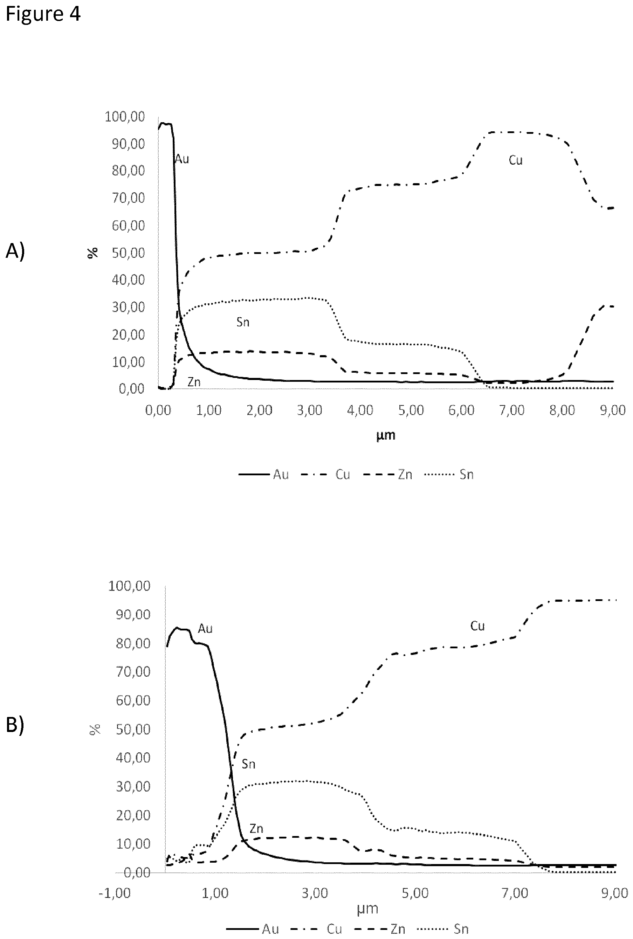

Figure 4 shows the GDOES depth profile of a nickel-less electroplated product according to Example 7 (2-3 µm yellow bronze layer with wt.-% of Cu:Sn:Zn = 80:15:05 next to bright copper layer, 2-3 µm white bronze layer with wt.-% of Cu:Sn:Zn = 50:35:15 next to gold finishing layer) before (A) and after a heat-treatment at 180 °C for 24 hours (B). The GDOES analysis reveals a higher diffusion of the gold in the white bronze layer compared to the one observed in Figure 3.

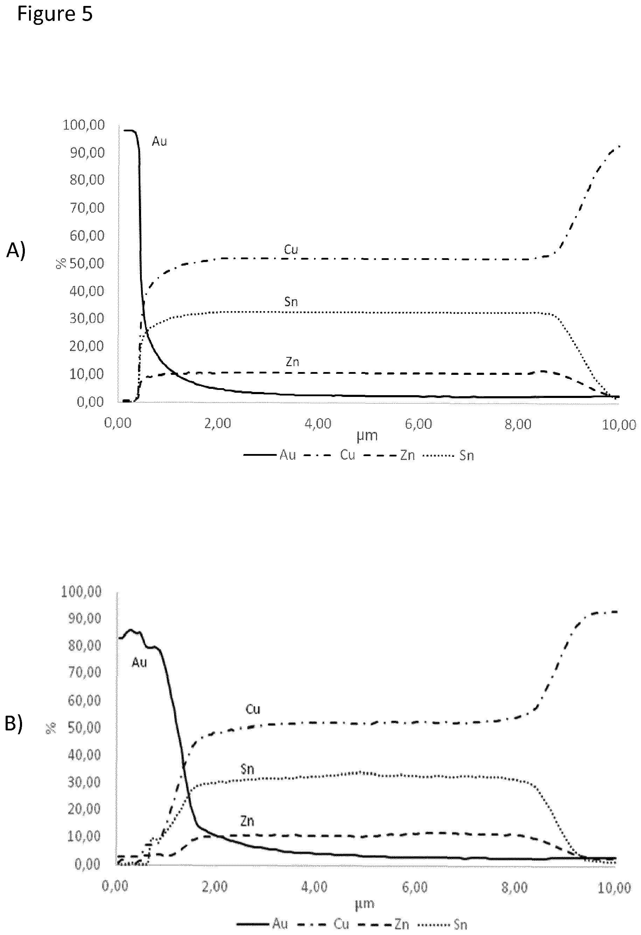

Figure 5 shows the GDOES depth profile of a nickel-less electroplated product according to the first assay of Example 8 (2-3 µm white bronze layer with wt.-% of Cu:Sn:Zn = 50:35:15 next to the gold finishing layer and another, identical 2-3 µm white bronze layer next to the bright copper layer) before (A) and after a heat-treatment at 180 °C for 24 hours (B). The effect of a double layer of white bronze is not very different from that of a single layer (see Fig. 1). The GDOES analysis reveals an alteration of the surface and thickness of the gold finishing layer due to gold diffusion into the white bronze layers.

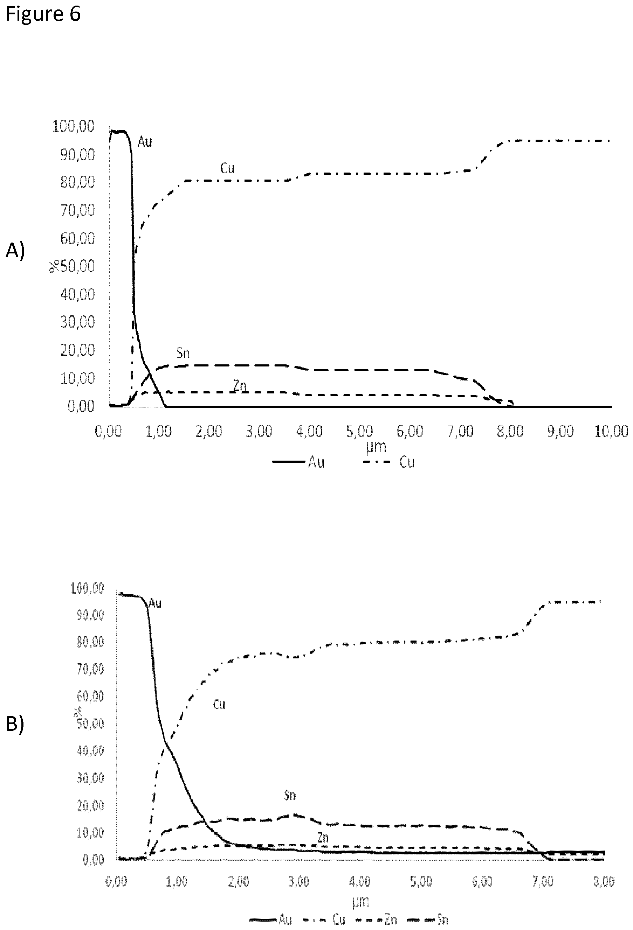

Figure 6 shows the GDOES depth profile of a nickel-less electroplated product according to the second assay of Example 8 (2-3 µm yellow bronze layer with wt.-% of Cu:Sn:Zn = 80:15:05 next to the gold finishing layer and another, identical 2-3 µm yellow bronze layer next to the bright copper layer) before (A) and after a heat-treatment at 180 °C for 24 hours (B). A double layer of yellow bronze does not show the reduced diffusion as compared to Fig. 3 for a white bronze-yellow bronze sequence and 4 for a yellow-bronze-white bronze sequence. The GDOES analysis reveals that the gold finishing layer surface is intact, but also reveals an internal alteration of the substrate which is likely responsible for the observed lower corrosion protection.

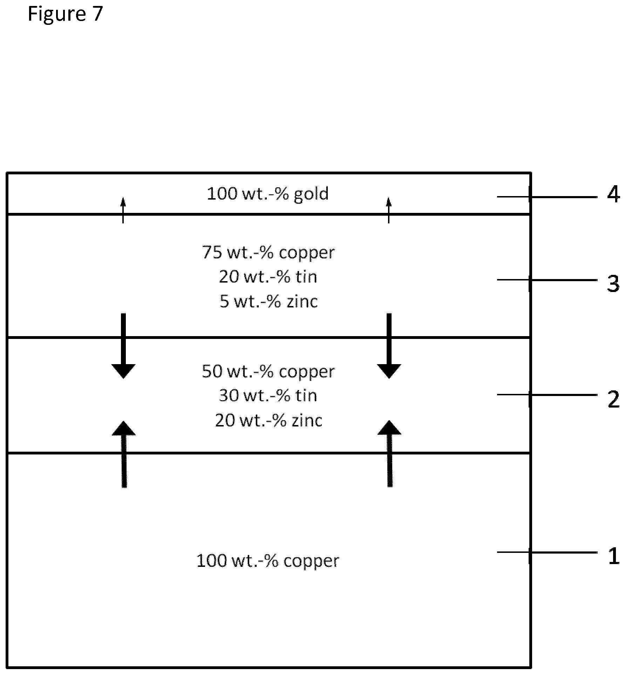

Figure 7 shows a model to explain the observed prevention of any major copper migration into the gold finishing layer 4. Migration of copper in the electroplated product is observed owing to the high mobility of copper atoms during the heat treatment of the electroplated product. Since the first copper alloy layer 2 (white bronze) has a reduced copper content compared to the second copper alloy layer 3 (yellow bronze) it acts as a copper sink which draws copper atoms from the second copper alloy layer 3 and also from the first copper layer 1. This creates a strong flow of copper from the second copper alloy layer 3 towards the first copper alloy layer 2. This strong flow of copper appears to prevent copper from migrating from the second copper alloy layer 3 into the gold finishing layer 4 and thus ensures a low copper concentration in the gold finishing layer 4 which leads to an improved corrosion resistance of the electroplated product and preservation of its gold color tone. The thickness of the arrows in the illustrated model are supposed to indicate the intensity of copper migration i.e. the thicker the arrow the stronger the copper migration in the indicated direction. A small gold migration from the gold finishing layer 4 to the second copper alloy layer 3 (not shown) compensates the copper migration from the second copper alloy layer 3 to the gold finishing layer 4 at this interface. Figures 1-3 show that there is also a thermodynamically driven, concomitant migration of tin and zinc.

### Example 1 - Composition and properties of employed white and yellow bronze

**White bronze**

| | Examples 4, 5 and 6 | Examples 7 and 8 |
|---|---|---|
| copper: | 50-54 wt.-% | 40-54 wt.-% |
| tin: | 28-32 wt.-% | 28-40 wt.-% |
| zinc: | 15-20 wt.-% | 10-20 wt.-% |

| | Examples 4 to 8 | |
|---|---|---|
| layer density: | 8.3 g/cm³ | |
| hardness: | 550 HV | |
| Colorimetric parameters*: | L 87-90; a 0,5-2,5; b 2-4 | |

| | | |
|---|---|---|
| * measured with Minolta CM-503i spectrophotometer. Illuminant used was Daylight D65 (6500K) with reflective component included (sci). Observer was set at standard (10°) and the measurements were done in the Color space CIE L*a*b*. | | |

**Yellow bronze**

| | Examples 4, 5 and 6 | Examples 7 and 8 |
|---|---|---|
| copper: | 72-77 wt.-% | 70-80 wt.-% |
| tin: | 17-23 wt.-% | 15-23 wt.-% |
| zinc: | 3-7 wt.-% | 3-10 wt.-% |

| | Examples 4 to 8 | |
|---|---|---|
| layer density: | 8.2 g/cm³ | |
| hardness: | 400 HV | |
| Colorimetric parameters*: | L 87-90; a 4-6; b 18-20 | |

| | | |
|---|---|---|
| * measured with Minolta CM-503i spectrophotometer. Illuminant used was Daylight D65 (6500K) with reflective component included (sci). Observer was set at standard (10°) and the measurements were done in the Color space CIE L*a*b*. | | |

### Example 2 - GDOES principle and GDOES analysis of the layer structure of inventive electroplated products and electroplated products of the prior art

### Principle of GDOES (glow discharge optical emission spectrometry)

The sample forms the cathode and a thin (4 mm diameter) copper tube forms the anode. A small O-ring separates the anode from the cathode. High-purity argon is pumped into the anode chamber. A high voltage (DC or RF) between sample and anode ionizes the argon to produce a glow discharge. The excited argon ions bombard the electroplated product sample and cause uniform sputtering of the sample surface. Atoms ejected are then excited by an Argon plasma, and finally come back to their fundamental energy level, emitting a characteristic X-ray photon.

Emitted photons, whose energy is characteristic of the energy level of a chemical element, are then collected by photomultipliers. The intensity of each emission depends on the concentration of the element in the sample. The recorded signals are processed to obtain the distribution of the elements according to the erosion time. GDOES provides depth profiling analysis of solids like metals, powders, polymers, glasses and ceramics (in the present case: depth profiling of electroplated substrates).

The advantages of GDOES are its rapid, multi-elemental acquisition, a simple implementation (no ultra-high vacuum) and the high sensitivity of detection for light elements, (like e.g . C, N and O).

### Present GDOES analysis

In the present analysis, the following GDOES parameters were used:
▪ GD Profiler, HORIBA, Jobin Yvon
▪ detection of elements: Au, Cu, Zn, Sn , Ni
▪ diameter of the anode: 4 mm
▪ analyses of the samples without and with heat treatment:
   - Sample 1: acidic copper+ gold 0.5 µm
   - Sample 2: acidic copper+ flash bronze (1 µm) + gold 0.5 µm
   - Sample 3: acidic copper+ white bronze (2 µm) + gold 0.5 µm
   - Sample 4: acidic copper+ white bronze (2 µm) +palladium/nickel flash 0,1 µm + gold 0.5 µm
   - Sample 5 : acidic copper+ white bronze (2 µm) + yellow bronze (3 µm) + gold 0.5 µm
   - Sample 6: acidic copper+ yellow bronze (2-3 µm) + white bronze (2-3 µm) + gold 0.5 µm; Sample 7: acidic copper+ white bronze (2-3 µm) + white bronze (2-3 µm) + gold 0.5 µm;
   - Sample 8: acidic copper+ yellow bronze (2-3 µm) + yellow bronze (2-3 µm) + gold 0.5 µm.
▪ analyze before and after heat treatment for 24 hours at 180°C
▪ power: 25 W
▪ pressure: 620 Pa
▪ wavelengths of the spectral lines used (in nm): Au 242,8 ; Cu 224, 7; Zn 481; Sn 317,5; Ni 341,5.

A low power was retained to decrease the speed of abrasion of the deposits with low thickness and to obtain maximum information at the interface. Quantified compositional results were evaluated automatically utilizing the standard Jobin Yvon quantum Intelligent Quantification software. The instrument was calibrated with standards of known composition. Depths were calculated using relative sputter rates, obtained from the sputter yields of each major element with corrections for composition and discharge conditions.

The Figures 1 to 6 give the GDOES depth profile for the different electroplated products of Examples 4 and 8 before and after the heat treatment at 180°C for 24 hours. The concentration of each chemical element Au, Cu, Zn, Sn and eventually Ni (when this element is present to determine the Pd-Ni coating) is shown (y-axis in wt.-%) as a function of the distance from the surface of the finishing layer towards the base material of the electroplated product (x-axis in µm). The thicknesses of the layers given for the process of the argon ablation (abscissa) and the metal concentrations (ordinate) are not normalized, but reflect the progress of the metal migration from the as-plated to the annealed state (annealing at 180 °C for 24 h).

### Example 3 - Performance in corrosion and abrasion tests of a nickel-containing electroplated product of the prior art

An electroplated nickel-containing product of the prior art comprises the following layers electrolytically deposited on a brass substrate:

| | |
|---|---|
| bright nickel layer: | 10 µm |
| nickel phosphorus layer: | 2 µm |
| gold layer as finishing layer: | 0.5 µm |

Said electroplated nickel-containing product has the following properties:

| | |
|---|---|
| NFS 80772: | 24 HOURS; |
| ABRASION WITH TURBULA: | 5 MINUTES |
| LEATHER INTERACTION UNDER ISO 4611: | 96 HOURS; |
| ISO 4538: | 48 HOURS; |
| ISO 4524/2: | 8 HOURS; |
| ISO 4611: | 96 HOURS; |
| ABRASION TEST BY TURBULA | |
| UNDER ISO 23160: | no color change after 30 min. |

Aim of the Turbula test is to simulate general wear that results from wearing the parts. The test was performed using an industrial rotating machine (Turbula, model T2F, Willy A. Bachofen AG Maschinenfabrik, Switzerland). Abrasive load was composed of abrasion ceramic elements mixed with fresh water containing a surface tension agent. Detailed information on the size of the ceramic elements is described in the ISO 23160 reference (see Table 1 - page 3). Test duration was 30 minutes. Evaluation of wear was done by visual inspection and comparison with reference samples. In particular, a color change after abrasion was used to evaluate wear resistance of the tested parts. The Turbula test is considered positive if no colour change is visible in the tested parts, especially on the edges or regions that are more exposed.

The result of this test gave that the nickel sequence gives a very good performance, especially regarding abrasion due to the thick layer of nickel that does not give discoloration.

### Example 4 - Performance in corrosion and abrasion tests of a nickel-less electroplated product of the prior art

An electroplated nickel-less product of the prior art comprises the following layers electrolytically deposited on a brass substrate:

| | |
|---|---|
| bright copper layer: | 10 µm |
| white bronze layer: | 2 µm |
| gold layer as finishing layer: | 0.5 µm |

Said electroplated nickel-free product has the following properties:

| | |
|---|---|
| NFS 80772: | 12 HOURS; |
| ABRASION WITH TURBULA: | 5 MINUTES |
| LEATHER INTERACTION UNDER ISO 4611: | 48-72 HOURS; |
| ISO 4538: | 48 HOURS; |
| ISO 4524/2: | 8 HOURS; |
| ISO 4611: | 96 HOURS; |
| ABRASION TEST BY TURBULA | |
| UNDER ISO 23160: | no color change after 30 min. |

Thus, the performance in some of the tests is reduced compared to the nickel-containing electroplated product.

The reason for which the bronze layer is very thin is related with the level of quality of bronze plating processes known in the prior art that do not allow exceeding 2 µm of the deposit while maintaining the desired bright aspect. In other words, this is the reason why thicker deposits of white bronze are undesirable for the jewelry and/or fashion industry because of a lack of brightness.

Due to the fact that the precious metal layers are regularly a very thin deposit (approx. 0.5 µm), it is easy for corrosive media or mechanical action to reach the underlying bronze layer. Said bronze layer is softer than nickel and has a slightly lower thickness. Thus, it is less resistant to mechanical stress and can be damaged easily. Upon damage of the white bronze layer, the underlying copper layer will appear and be exposed to the atmosphere and oxidation. For these reasons, the nickel-free plated parts are more easily damaged by aggressive media, like leather and the acid sweat of human skin.

### Example 5 - Performance in corrosion and abrasion tests of a nickel-containing electroplated product of the prior art having a palladium-nickel intermediate layer

An electroplated nickel-containing product of the prior art comprises the following layers electrolytically deposited on a brass substrate:

| | |
|---|---|
| bright copper layer: | 10 µm |
| white bronze layer: | 2 µm |
| palladium-nickel layer: | 0.3 µm |
| gold layer as finishing layer: | 0.5 µm |

Said electroplated nickel-free product has the following properties:

| | |
|---|---|
| NFS 80772: | 24 HOURS; |
| ABRASION WITH TURBULA: | 5 MINUTES |
| LEATHER INTERACTION UNDER ISO 4611: | 48-72 HOURS; |
| ISO 4538: | 48 HOURS; |
| ISO 4524/2: | 8 HOURS; |
| ISO 4611: | 96 HOURS; |
| ABRASION TEST BY TURBULA | |
| UNDER ISO 23160: | no color change after 30 min. |

In fact, even a palladium intermediate layer with only 0.3 µm thickness increases the performance in the NFS 80772 test from 12 hours to almost 24 hours. However, the disadvantage of having said palladium intermediate layer is that the electroplating of the substrates is more demanding, time-consuming (shift of electrolyte) and cost-intensive.

### Example 6 - Performance in corrosion and abrasion tests of an inventive nickel-less electroplated product

A first example of an inventive electroplated nickel-less product comprises the following layers electrolytically deposited on a brass or zamak substrate:

| | |
|---|---|
| bright copper layer: | 10 µm |
| white bronze layer (Cu:Sn:Zn = 40:40:20): | 2-4 µm |
| yellow bronze layer (Cu:Sn:Zn = 70:20:10): | 3-4 µm |
| gold layer as finishing layer: | 0.5 µm |

A second example of an electroplated nickel-less product not according to the invention comprises the following layers electrolytically deposited on a brass or zamak substrate:

| | |
|---|---|
| bright copper layer: | 10 µm |
| yellow bronze layer (Cu:Sn:Zn = 70:20:10): | 3-4 µm |
| white bronze layer (Cu:Sn:Zn = 40:40:20): | 2-3 µm |
| palladium layer as finishing layer: | 0.5 µm |

The electroplated nickel-free products of the first and second example have the following properties:

| | |
|---|---|
| NFS 80772: | 24 HOURS; |
| ABRASION WITH TURBULA: | 5 MINUTES |
| LEATHER INTERACTION UNDER ISO 4611: | 96 HOURS; |
| ISO 4538: | 48 HOURS; |
| ISO 4524/2: | 8 HOURS; |
| ISO 4611: | 96 HOURS; |
| ABRASION TEST BY TURBULA | |
| UNDER ISO 23160: | no color change after 30 min. |

Thus, the improvement of performance is essentially related to the protection of the copper underlayer on the one hand and to the conservation of the quality of the top gold layer on the other hand by the presence of both the white and yellow bronze layer.

### Example 7 - Performance in corrosion and abrasion tests of an inventive nickel-less electroplated product - assessing the influence of the sequence of the bronze layers

A white bronze layer is deposited next to the gold layer and a yellow bronze layer is deposited next to the bright copper layer i.e. the inventive electroplated nickel-less product comprises the following layers electrolytically deposited on a brass or zamak substrate (indicated relations of the elements in the bronze layer are in weight-%):

| | |
|---|---|
| bright copper layer: | >10 µm |
| yellow bronze layer (Cu:Sn:Zn = 80:15:05): | 2-3 µm |
| white bronze layer (Cu:Sn:Zn = 50:35:15): | 2-3 µm |
| gold layer as finishing layer: | 0.5 µm |

The electroplated nickel-free product has the following properties:

| | |
|---|---|
| NFS 80772: | 12 HOURS; |
| ABRASION WITH TURBULA: | 3 MINUTES |
| LEATHER INTERACTION UNDER ISO 4611: | 56 HOURS; |
| ABRASION TEST BY TURBULA | |
| UNDER ISO 23160: | no color change after 60 min. |

The properties of the electroplated nickel-free product obtained for the plating sequence of example 4 are better than the properties obtained for the plating sequence of this example, showing that the sequence bright copper/yellow bronze/white bronze is less adapted as underlayer of gold than the sequence copper/white bronze/yellow bronze. The present sequence is more adapted as an underlayer of Palladium as final finish.

### Example 8 - Performance in corrosion and abrasion tests of two non-inventive nickel-less electroplated product - assessing the significance of the difference in copper concentration of the bronze layers

In a first assay, next to the gold layer and next to the bright copper layer a white bronze layer with identical composition is deposited i.e. the electroplated nickel-less product comprises the following layers electrolytically deposited on a brass or zamak substrate (indicated relations of the elements in the bronze layer are in weight-%):

| | |
|---|---|
| bright copper layer: | >10 µm |
| white bronze layer (Cu:Sn:Zn = 50:35:15): | 2-3 µm |
| white bronze layer (Cu:Sn:Zn = 50:35:15): | 2-3 µm |
| gold layer as finishing layer: | 0.5 µm |

The electroplated nickel-free product has the following properties:

| | |
|---|---|
| NFS 80772: | 12 HOURS; |
| ABRASION WITH TURBULA: | 3 MINUTES |
| LEATHER INTERACTION UNDER ISO 4611: | 48 HOURS; |
| ABRASION TEST BY TURBULA | |
| UNDER ISO 23160: | no color change after 60 min. |

In a second assay, next to the gold layer and next to the bright copper layer a yellow bronze layer with identical composition is deposited i.e. the electroplated nickel-less product comprises the following layers electrolytically deposited on a brass or zamak substrate (indicated relations of the elements in the bronze layer are in weight-%):

| | |
|---|---|
| bright copper layer: | >10 µm |
| yellow bronze layer (Cu:Sn:Zn = 80:15:05): | 2-3 µm |
| yellow bronze layer (Cu:Sn:Zn = 80:15:05): | 2-3 µm |
| gold layer as finishing layer: | 0.5 µm |

The electroplated nickel-free product has the following properties:

| | |
|---|---|
| NFS 80772: | 6 HOURS; |
| ABRASION WITH TURBULA: | 3 MINUTES |
| LEATHER INTERACTION UNDER ISO 4611: | 48 HOURS; |
| ABRASION TEST BY TURBULA | |
| UNDER ISO 23160: | no color change after 120 min. |

From this experiment, it is evident that if two bronze layers with identical copper concentration (either two white bronze layers or two yellow bronze layers) are deposited, the corrosion resistance of the resulting substrate is worse than if the two bronze layers with different copper concentration are deposited. In addition, it can be observed that plating two white bronze layers provides better corrosion protection than plating two yellow bronze layers. This indicates that the worse corrosion protection observed may be caused by a higher copper content in the gold finishing layer of the final substrate due to copper migration into said layer.

## Claims

1. Electroplated product, comprising
a) a base material;
b) a first layer comprising or consisting of copper, wherein the first layer is disposed on the base material;
c) a second layer comprising or consisting of a first copper alloy, wherein the first copper alloy comprises tin and zinc;
d) a third layer comprising or consisting of a second copper alloy, wherein the second copper alloy comprises tin and zinc; and
e) a fourth layer comprising or consisting of a precious metal; wherein the copper concentration in the first copper alloy is different from the copper concentration in the second copper alloy and
i) wherein the second layer is disposed on the first layer, the third layer is disposed on the second layer and the fourth layer is disposed on the third layer; or
ii) the third layer is disposed on the first layer, the second layer is disposed on the third layer and the fourth layer is disposed on the second layer;
**characterized in that** the fourth layer is the finishing metal layer of the electroplated product and comprises or consists of a precious metal selected from the group consisting of gold, silver, platinum, ruthenium, rhodium, osmium, iridium and alloys thereof,
wherein the electroplated product does not comprise palladium.

2. Electroplated product according to claim 1, **characterized in that** the copper concentration in the second alloy is higher than the copper concentration in the first alloy.

3. Electroplated product according to one of the preceding claims, **characterized in that** the copper concentration of the first copper alloy differs from the copper concentration of the second copper alloy by an absolute value of 1 to 99 wt.-%, preferably 5 to 80 wt.-%, more preferably 10 to 60 wt.-%, even more preferably 15 to 40 wt.-%, most prefer ably 20 to 30 wt.-%.

4. Electroplated product according to one of the preceding claims, **characterized in that** the copper concentration in the
i) first copper alloy is ≤ 65 wt.-%, preferably 30 to 64 wt.-%, more preferably 40 to 60 wt.-%, most preferably 50 to 54 wt.-%, in relation to the whole weight of the copper alloy; and/or
ii) the second copper alloy is ≥ 66 wt.-%, preferably 68 to 90 wt.-%, more preferably 70 to 80 wt.-%, most preferably 72 to 77 wt.-%, in relation to the whole weight of the copper alloy.

5. Electroplated product according to one of the preceding claims, **characterized in that** the zinc concentration in the
i) first copper alloy is ≥ 10 wt.-%, preferably 11 to 35 wt.-%, more preferably 12 to 25 wt.-%, most preferably 15 to 20 wt.-%, in relation to the whole weight of the copper alloy; and/or
ii) the second copper alloy is ≤ 12 wt.-%, preferably 5 to 10 wt.-%, more preferably 6 to 8 wt.-%, most preferably 6 to 7 wt.-%, in relation to the whole weight of the copper alloy.

6. Electroplated product according to one of the preceding claims, **characterized in that** the tin concentration in the
i) first copper alloy is ≥ 26 wt.-%, preferably 26 to 35 wt.-%, more preferably 27 to 34 wt.-%, most preferably 28 to 32 wt.-%, in relation to the whole weight of the copper alloy; and/or
ii) the second copper alloy is ≤ 25 wt.-%, preferably 1 to 25 wt.-%, more preferably 10 to 24 wt.-%, most preferably 17 to 23 wt.-%, in relation to the whole weight of the copper alloy.

7. Electroplated product according to one of the preceding claims, **characterized in that** the first copper alloy and/or the second copper alloy comprises Bi, Pb and/or Sb, preferably Bi.

8. Electroplated product according to one of the preceding claims, **characterized in that** there is no layer comprising or consisting of nickel, cobalt and/or chromium between the first layer and fourth, wherein the electroplated product preferably does not comprise nickel, cobalt and/or chromium, most preferably no nickel.

9. Electroplated product according to one of the preceding claims, **characterized in that** a layer comprising or consisting of a hydrophobic substance is disposed on the fourth layer, preferably a monolayer of a hydrophobic substance, more preferably a monolayer of a hydrophobic substance comprising thiol groups, especially a monolayer of alkanethiol monomers or alkanethiol polymers.

10. Electroplated product according to one of the preceding claims, **characterized in that** the precious metal is selected from the group consisting of gold, silver and alloys thereof, more preferably gold and alloys thereof, most preferably gold.

11. Electroplated product according to one of the preceding claims, **characterized in that** the base material comprises or consists of bronze, brass, zamak, alpaca, copper alloy, tin alloy and/or steel.

12. Electroplated product according to one of the preceding claims, **characterized in that** the thickness of
i) the first layer is 5 to 15 µm, preferably 8 to 12 µm;
ii) the second layer is 1 to 10 µm, preferably 2 to 8 µm;
iii) the third layer is 1 to 10 µm, preferably 2 to 4 µm; and/or
iv) the fourth layer is 0.1 to 5 µm, preferably 0.2 to 1 µm.

13. Method of producing an electroplated product according to one of the preceding claims, comprising the steps:
a) electroplating a layer comprising or consisting of a first copper alloy on a copper layer disposed on a substrate;
b) electroplating a layer comprising or consisting of a second copper alloy on the layer of step a);
c) electroplating a layer comprising or consisting of a precious metal on the layer of step b), wherein the first copper alloy comprises tin and zinc and the second copper alloy comprises tin and zinc, and wherein the first copper alloy layer is plated with a copper concentration different from that of the second copper alloy layer wherein
i) the second layer is disposed on the first layer, the third layer is disposed on the second layer and the fourth layer is disposed on the third layer; or
ii) the third layer is disposed on the first layer, the second layer is disposed on the third layer and the fourth layer is disposed on the second layer;
**characterized in that** the layer comprising or consisting of a precious metal is the finishing metal layer of the electroplated product, wherein the precious metal is selected from the group consisting of gold, silver, platinum, ruthenium, rhodium, osmium, iridium and alloys thereof, wherein the electroplated product does not comprise palladium.

14. Use of the electroplated product according to one of claims 1 to 12 in the jewelry industry, fashion industry, leather industry, watch industry, eyewear industry, trinkets industry and/or lock industry.

## Patentansprüche

1. Galvanisiertes Produkt, umfassend
a) ein Basismaterial;
b) eine erste Schicht, enthaltend oder bestehend aus Kupfer, wobei die erste Schicht auf dem Basismaterial angeordnet ist;
c) eine zweite Schicht, enthaltend oder bestehend aus einer ersten Kupferlegierung, wobei die erste Kupferlegierung Zinn und Zink enthält;
d) eine dritte Schicht, enthaltend oder bestehend aus einer zweiten Kupferlegierung, wobei die zweite Kupferlegierung Zinn und Zink enthält; und
e) eine vierte Schicht, enthaltend oder bestehend aus einem Edelmetall;
wobei sich die Kupferkonzentration in der ersten Kupferlegierung von der Kupferkonzentration in der zweiten Kupferlegierung unterscheidet und
i) wobei die zweite Schicht auf der ersten Schicht angeordnet ist, die dritte Schicht auf der zweiten Schicht angeordnet ist und die vierte Schicht auf der dritten Schicht angeordnet ist; oder
ii) die dritte Schicht auf der ersten Schicht angeordnet ist, die zweite Schicht auf der dritten Schicht angeordnet ist und die vierte Schicht auf der zweiten Schicht angeordnet ist;
**dadurch gekennzeichnet, dass** die vierte Schicht die abschließende Metallschicht des galvanisierten Produkts ist und ein Edelmetall enthält oder daraus besteht, ausgewählt aus der Gruppe, bestehend aus Gold, Silber, Platin, Ruthenium, Rhodium, Osmium, Iridium und deren Legierungen,
wobei das galvanisierte Produkt kein Palladium enthält.

2. Galvanisiertes Produkt nach Anspruch 1, **dadurch gekennzeichnet, dass** die Kupferkonzentration in der zweiten Kupferlegierung höher ist als die Kupferkonzentration in der ersten Kupferlegierung.

3. Galvanisiertes Produkt nach einem der vorangehenden Ansprüche,
**dadurch gekennzeichnet, dass** sich die Kupferkonzentration der ersten Kupferlegierung von der Kupferkonzentration der zweiten Kupferlegierung um einen absoluten Wert von 1 Gew.-% bis 99 Gew.-%, vorzugsweise 5 Gew.-% bis 80 Gew.-%, besonders bevorzugt 10 Gew.-% bis 60 Gew.-%, noch bevorzugter 15 Gew.-% bis 40 Gew.-%, am meisten bevorzugt 20 Gew.-% bis 30 Gew.-% unterscheidet.

4. Galvanisiertes Produkt nach einem der vorangehenden Ansprüche,
**dadurch gekennzeichnet, dass** die Kupferkonzentration in der
i) ersten Kupferlegierung ≤ 65 Gew.-%, vorzugsweise 30 Gew.-% bis 64 Gew.-%, besonders bevorzugt 40 Gew.-% bis 60 Gew.-%, am meisten bevorzugt 50 Gew.-% bis 54 Gew.-%, bezogen auf das Gesamtgewicht der Kupferlegierung, beträgt; und/oder
ii) die zweite Kupferlegierung ≥ 66 Gew.-%, vorzugsweise 68 Gew.-% bis 90 Gew.-%, besonders bevorzugt 70 Gew.-% bis 80 Gew.-%, am meisten bevorzugt 72 Gew.-% bis 77 Gew.-%, bezogen auf das Gesamtgewicht der Kupferlegierung, beträgt.

5. Galvanisiertes Produkt nach einem der vorangehenden Ansprüche,
**dadurch gekennzeichnet, dass** die Zinkkonzentration in der
i) ersten Kupferlegierung ≥ 10 Gew.-%, vorzugsweise 11 Gew.-% bis 35 Gew.-%, besonders bevorzugt 12 Gew.-% bis 25 Gew.-%, am meisten bevorzugt 15 Gew.-% bis 20 Gew.-%, bezogen auf das Gesamtgewicht der Kupferlegierung, beträgt; und/oder
ii) die zweite Kupferlegierung ≥ 12 Gew.-%, vorzugsweise 5 Gew.-% bis 10 Gew.-%, besonders bevorzugt 6 Gew.-% bis 8 Gew.-%, am meisten bevorzugt 6 Gew.-% bis 7 Gew.-%, bezogen auf das Gesamtgewicht der Kupferlegierung, beträgt.

6. Galvanisiertes Produkt nach einem der vorangehenden Ansprüche,
**dadurch gekennzeichnet, dass** die Zinnkonzentration in der
i) ersten Kupferlegierung ≥ 26 Gew.-%, vorzugsweise 26 Gew.-% bis 35 Gew.-%, besonders bevorzugt 27 Gew.-% bis 34 Gew.-%, am meisten bevorzugt 28 Gew.-% bis 32 Gew.-%, bezogen auf das Gesamtgewicht der Kupferlegierung, beträgt; und/oder
ii) die zweite Kupferlegierung ≥ 25 Gew.-%, vorzugsweise 1 Gew.-% bis 25 Gew.-%, besonders bevorzugt 10 Gew.-% bis 24 Gew.-%, am meisten bevorzugt 17 Gew.-% bis 23 Gew.-%, bezogen auf das Gesamtgewicht der Kupferlegierung, beträgt.

7. Galvanisiertes Produkt nach einem der vorangehenden Ansprüche, **dadurch gekennzeichnet, dass** die erste Kupferlegierung und/oder die zweite Kupferlegierung Bi, Pb und/oder Sb, vorzugsweise Bi, enthält.

8. Galvanisiertes Produkt nach einem der vorangehenden Ansprüche, **dadurch gekennzeichnet, dass** zwischen der ersten und der vierten Schicht keine Schicht vorhanden ist, enthaltend oder bestehend aus Nickel, Kobalt und/oder Chrom, wobei das galvanisierte Produkt vorzugsweise kein Nickel, Kobalt und/oder Chrom, am meisten bevorzugt kein Nickel enthält.

9. Galvanisiertes Produkt nach einem der vorangehenden Ansprüche, **dadurch gekennzeichnet, dass** auf der vierten Schicht eine Schicht angeordnet ist, enthaltend oder bestehend aus einer hydrophoben Substanz, vorzugsweise eine Monoschicht aus einer hydrophoben Substanz, besonders bevorzugt eine Monoschicht aus einer hydrophoben Substanz, enthaltend Thiolgruppen, insbesondere eine Monoschicht aus Alkanethiol-Monomeren oder Alkanethiol-Polymeren.

10. Galvanisiertes Produkt nach einem der vorangehenden Ansprüche, **dadurch gekennzeichnet, dass** das Edelmetall ausgewählt ist aus der Gruppe bestehend aus Gold, Silber und deren Legierungen, besonders bevorzugt Gold und dessen Legierungen, am meisten bevorzugt Gold.

11. Galvanisiertes Produkt nach einem der vorangehenden Ansprüche,
**dadurch gekennzeichnet, dass** das Basismaterial Bronze, Messing, Zamak, Alpaka, Kupferlegierung, Zinnlegierung und/oder Stahl enthält oder daraus besteht.

12. Galvanisiertes Produkt nach einem der vorangehenden Ansprüche,
**dadurch gekennzeichnet, dass** die Dicke von
i) der ersten Schicht 5 µm bis 15 µm, vorzugsweise 8 µm bis 12 µm beträgt;
ii) der zweiten Schicht 1 µm bis 10 µm, vorzugsweise 2 µm bis 8 µm beträgt;
iii) der dritten Schicht 1 µm bis 10 µm, vorzugsweise 2 µm bis 4 µm beträgt; und/oder
iv) der vierten Schicht 0,1 µm bis 5 µm, vorzugsweise 0,2 µm bis 1 µm beträgt.

13. Verfahren des Erzeugens eines galvanisierten Produkts nach einem der vorangehenden Ansprüche, umfassend die Schritte:
a) Galvanische Abscheidung einer Schicht, enthaltend oder bestehend aus einer ersten Kupferlegierung, auf einer Kupferschicht, die auf einem Substrat angeordnet ist;
b) Galvanische Abscheidung einer Schicht, enthaltend oder bestehend aus einer zweiten Kupferlegierung, auf der Schicht von Schritt a);
c) Galvanische Abscheidung einer Schicht, enthaltend oder bestehend aus einem Edelmetall, auf der Schicht von Schritt b), wobei die erste Kupferlegierung Zinn und Zink enthält und die zweite Kupferlegierung Zinn und Zink enthält, und
wobei die erste Kupferlegierungsschicht mit einer Kupferkonzentration beschichtet ist, die sich von der der zweiten Kupferlegierungsschicht unterscheidet,
wobei
i) die zweite Schicht auf der ersten Schicht abgeschieden ist, die dritte Schicht auf der zweiten Schicht abgeschieden ist und die vierte Schicht auf der dritten Schicht abgeschieden ist; oder
ii) die dritte Schicht auf der ersten Schicht abgeschieden ist, die zweite Schicht auf der dritten Schicht abgeschieden ist und die vierte Schicht auf der zweiten Schicht abgeschieden ist;
**dadurch gekennzeichnet, dass** die Schicht, enthaltend oder bestehend aus Edelmetall, die abschließende Metallschicht des galvanisierten Produkts ist, wobei das Edelmetall ausgewählt ist aus der Gruppe bestehend aus Gold, Silber, Platin, Ruthenium, Rhodium, Osmium, Iridium und Legierungen davon, wobei das galvanisierte Produkt kein Palladium enthält.

14. Verwendung des galvanisierten Produkts nach einem der Ansprüche 1 bis 12 in der Schmuckindustrie, Modeindustrie, Lederindustrie, Uhrenindustrie, Brillenindustrie, Modeschmuckindustrie und/oder Schlossindustrie.

## Revendications

1. Produit à revêtement électrolytique, comprenant :
a) un matériau de base ;
b) une première couche qui comprend ou qui est constituée par du cuivre, dans lequel la première couche est disposée sur le matériau de base ;
c) une deuxième couche qui comprend ou qui est constituée par un premier alliage de cuivre, dans lequel le premier alliage de cuivre comprend de l'étain et du zinc ;
d) une troisième couche qui comprend ou qui est constituée par un second alliage de cuivre, dans lequel le second alliage de cuivre comprend de l'étain et du zinc ; et
e) une quatrième couche qui comprend ou qui est constituée par un métal précieux;
dans lequel la concentration en cuivre dans le premier alliage de cuivre est différente de la concentration en cuivre dans le second alliage de cuivre ; et dans lequel :
i) la deuxième couche est disposée sur la première couche, la troisième couche est disposée sur la deuxième couche et la quatrième couche est disposée sur la troisième couche ; ou
ii) la troisième couche est disposée sur la première couche, la deuxième couche est disposée sur la troisième couche et la quatrième couche est disposée sur la deuxième couche ;
**caractérisé en ce que** la quatrième couche est la couche en métal de finition du produit à revêtement électrolytique et elle comprend ou est constituée par un métal précieux qui est sélectionné parmi le groupe qui est constitué par l'or, l'argent, le platine, le ruthénium, le rhodium, l'osmium, l'iridium et leurs alliages ;
dans lequel le produit à revêtement électrolytique ne comprend pas de palladium.

2. Produit à revêtement électrolytique selon la revendication 1, **caractérisé en ce que** la concentration en cuivre dans le second alliage est supérieure à la concentration en cuivre dans le premier alliage.

3. Produit à revêtement électrolytique selon l'une quelconque des revendications précédentes, **caractérisé en ce que** la concentration en cuivre du premier alliage de cuivre diffère de la concentration en cuivre du second alliage de cuivre d'une valeur absolue de 1 % en poids à 99 % en poids, de préférence de 5 % en poids à 80 % en poids, de façon davantage préférable, de 10 % en poids à 60 % en poids, de façon encore davantage préférable, de 15 % en poids à 40 % en poids et de la façon la plus préférable, de 20 % en poids à 30 % en poids.

4. Produit à revêtement électrolytique selon l'une quelconque des revendications précédentes, **caractérisé en ce que** la concentration en cuivre dans
i) le premier alliage de cuivre est ≤ 65 % en poids, de préférence, elle est comprise entre 30 % en poids et 64 % en poids, de façon davantage préférable, elle est comprise entre 40 % en poids et 60 % en poids %, de la façon la plus préférable, elle est comprise entre 50 % en poids et 54 % en poids, en relation avec le poids total de l'alliage de cuivre ; et/ou dans
ii) le second alliage de cuivre est ≥ 66 % en poids, de préférence, elle est comprise entre 68 % en poids et 90 % en poids, de façon davantage préférable, elle est comprise entre 70 % en poids et 80 % en poids, de la façon la plus préférable, elle est comprise entre 72 % en poids et 77 % en poids, en relation avec le poids total de l'alliage de cuivre.

5. Produit à revêtement électrolytique selon l'une quelconque des revendications précédentes, **caractérisé en ce que** la concentration en zinc dans
i) le premier alliage de cuivre est ≥ 10 % en poids, de préférence, elle est comprise entre 11 % en poids et 35 % en poids, de façon davantage préférable, elle est comprise entre 12 % en poids et 25 % en poids, de la façon la plus préférable, elle est comprise entre 15 % en poids et 20 % en poids, en relation avec le poids total de l'alliage de cuivre ; et/ou dans
ii) le second alliage de cuivre est ≤ 12 % en poids, de préférence, elle est comprises entre 5% en poids et 10 % en poids, de façon davantage préférable, elle est comprise entre 6 % en poids et 8 % en poids, de la façon la plus préférable, elle est comprise entre 6 % en poids et 7 % en poids, en relation avec le poids total de l'alliage de cuivre.

6. Produit à revêtement électrolytique selon l'une quelconque des revendications précédentes, **caractérisé en ce que** la concentration en étain dans
i) le premier alliage de cuivre est ≥ 26% en poids, de préférence, elle est comprise entre 26 % en poids et 35 % en poids, de façon davantage préférable, elle est comprise entre 27 % en poids et 34 % en poids, de la façon la plus préférable, elle est comprise entre 28 % en poids et 32 % en poids, en relation avec le poids total de l'alliage de cuivre ; et/ou dans
ii) le second alliage de cuivre est ≤ 25 % en poids, de préférence, elle est comprise entre 1 % en poids et 25 % en poids, de façon davantage préférable, elle est comprise entre 10 % en poids et 24 % en poids, de la façon la plus préférable, elle est comprise entre 17 % en poids et 23 % en poids, en relation avec le poids total de l'alliage de cuivre.

7. Produit à revêtement électrolytique selon l'une quelconque des revendications précédentes, **caractérisé en ce que** le premier alliage de cuivre et/ou le second alliage de cuivre comprennent/comprend du Bi, du Pb et/ou du Sb, de préférence du Bi.

8. Produit à revêtement électrolytique selon l'une quelconque des revendications précédentes, **caractérisé en ce qu'**il n'y a pas de couche qui comprend ou qui est constituée part du nickel, du cobalt et/ou du chrome entre la première couche et la quatrième couche, dans lequel le produit à revêtement électrolytique, de préférence, ne comprend pas de nickel, de cobalt et/ou de chrome, de la façon la plus préférable, il ne comprend pas de nickel.

9. Produit à revêtement électrolytique selon l'une quelconque des revendications précédentes, **caractérisé en ce qu'**une couche qui comprend ou qui est constituée par une substance hydrophobe est disposée sur la quatrième couche, de préférence une monocouche d'une substance hydrophobe, de façon davantage préférable, une monocouche d'une substance hydrophobe qui comprend des groupes thiol, tout particulièrement une monocouche qui est constituée par des monomères d'alcanethiol ou par des polymères d'alcanethiol.

10. Produit à revêtement électrolytique selon l'une quelconque des revendications précédentes, **caractérisé en ce que** le métal précieux est sélectionné parmi le groupe qui est constitué par l'or, l'argent et leurs alliages, de façon davantage préférable, l'or et ses alliages, de la façon la plus préférable, l'or.

11. Produit à revêtement électrolytique selon l'une quelconque des revendications précédentes, **caractérisé en ce que** le matériau de base comprend ou est constitué par du bronze, du laiton, du zamac, de l'alpaga, un alliage de cuivre, un alliage d'étain et/ou de l'acier.

12. Produit à revêtement électrolytique selon l'une quelconque des revendications précédentes, **caractérisé en ce que** :
i) l'épaisseur de la première couche est comprise entre 5 µm et 15 µm, de préférence entre 8 µm et 12 µm ;
ii) l'épaisseur de la deuxième couche est comprise entre 1 µm et 10 µm, de préférence entre 2 µm et 8 µm ;
iii) l'épaisseur de la troisième couche est comprise entre 1 µm et 10 µm, de préférence entre 2 µm et 4 µm ; et/ou
iv) l'épaisseur de la quatrième couche est comprise entre 0,1 µm et 5 µm, de préférence entre 0,2 µm et 1 nm.

13. Procédé de fabrication d'un produit à revêtement électrolytique, comprenant les étapes constituées par :
a) le dépôt électrolytique d'une couche qui comprend ou qui est constituée par un premier alliage de cuivre sur une couche en cuivre qui est disposée sur un substrat ;
b) le dépôt électrolytique d'une couche qui comprend ou qui est constituée par un second alliage de cuivre sur la couche de l'étape a) ; et
c) le dépôt électrolytique d'une couche qui comprend ou qui est constituée par un métal précieux sur la couche de l'étape b) ; dans lequel le premier alliage de cuivre comprend de l'étain et du zinc et le second alliage de cuivre comprend de l'étain et du zinc ; et
dans lequel la couche en premier alliage de cuivre est déposée selon une concentration en cuivre qui est différente de celle de la couche en second alliage de cuivre ;
dans lequel :
i) la deuxième couche est disposée sur la première couche, la troisième couche est disposée sur la deuxième couche et la quatrième couche est disposée sur la troisième couche ; ou
ii) la troisième couche est disposée sur la première couche, la deuxième couche est disposée sur la troisième couche et la quatrième couche est disposée sur la deuxième couche ;
**caractérisé en ce que** la couche qui comprend ou qui est constituée par un métal précieux est la couche en métal de finition du produit à revêtement électrolytique, dans lequel le métal précieux est sélectionné parmi le groupe qui est constitué par l'or, l'argent, le platine, le ruthénium, le rhodium, l'osmium, l'iridium et leurs alliages ; dans lequel le produit à revêtement électrolytique ne comprend pas de palladium.

14. Utilisation du produit à revêtement électrolytique selon l'une quelconque des revendications 1 à 12 dans l'industrie de la bijouterie, l'industrie de la mode, l'industrie du cuir, l'industrie horlogère, l'industrie de la lunetterie, l'industrie des bibelots, babioles et colifichets et/ou l'industrie des serrures.
